# EUROPÄISCHE PATENTSCHRIFT

(11) **EP 2 127 832 B1**
(45) Veröffentlichungstag und Bekanntmachung des Hinweises auf die Patenterteilung: **24.11.2010**
(21) Anmeldenummer: 08009703.3
(22) Anmeldetag: 28.05.2008
(51) Int. Cl.: B27D 1/04, B27D 5/00, B29C 63/00, B32B 21/00

(54) **Kantenmaterial**
Edging material
Matériau de rebord

(43) Veröffentlichungstag der Anmeldung: 02.12.2009
(73) Patentinhaber: Homag Holzbearbeitungssysteme AG, 72296 Schopfloch (DE)
(72) Erfinder: Schmid, Johannes, 72181 Starzach-Wachendorf (DE); Reich, Klaus, 72290 Loßburg (DE)
(74) Vertreter: HOFFMANN EITLE

(56) Entgegenhaltungen:
- DE-C- 721 659
- DE-U1-202006 010 157
- US-A- 4 931 124
- US-A1- 2006 127 634

## Beschreibung

### Technisches Gebiet

Die Erfindung betrifft ein Werkstück mit plattenförmiger Gestalt gemäß dem Oberbegriff des Anspruchs 1, und mit Kantenmaterial zum Anbringen an bevorzugt plattenförmigen Werkstücken, das eine allgemein längliche Gestalt mit einer Längsrichtung besitzt, wobei dasKantenmaterial mindestens eine Materialschicht aufweist.

### Stand der Technik

Werkstücke mit Kantenmaterialien der eingangs genannten Art finden im Bereich der Möbel- und Bauelementeindustrie verbreitet Anwendung. Dabei werden üblicherweise Werkstücke formatiert und im Bereich der Schmalflächen vorbereitet, um anschließend das Kantenmaterial auf die Schmalfläche aufzubringen. Um eine hohe Werkstücksqualität und ein ansprechendes Erscheinungsbild der Werkstücke zu erzielen, ist es wichtig, dass das Kantenmaterial möglichst genau dem Konturverlauf der jeweiligen Werkstückschmalfläche folgt.

Bei leichten Spanplatten oder ähnlichen offenporigen Werkstücken ist es beispielsweise aus der EP 1 563 970 bekannt, in der Schmalfläche des Werkstücks zunächst eine Aufnahmenut vorzusehen, in der eine relativ steife Stützkante zur Stabilisierung des Werkstücks und dessen Schmalfläche angeordnet wird. Anschließend wird eine Dekorkante auf die Schmalfläche aufgebracht. Allerdings hat sich gezeigt, dass das Kantenmaterial bei kleiner werdenden Biegeradien eine zunehmende Querverformung bzw. eine gewisse Welligkeit aufweist, was äußerst unerwünscht ist. Dies führt dazu, dass das Kantenmaterial vorgebogen oder in mehrere Abschnitte geteilt werden muss, was allerdings mit einem sehr hohen Aufwand verbunden ist, ohne eine optimale Werkstückqualität zu ergeben.

### Darstellung der Erfindung

Der Erfindung liegt daher die Aufgabe zugrunde, ein plattenförmiges Werkstück mit einem an einer Schmalfläche angebrachten Kantenmaterial bereitzustellen, wobei das Kantenmaterial bei einfachem Verfahrensablauf eine hohe Werkstückqualität im Bereich der Schmalfläche ermöglicht.

Diese Aufgabe wird erfindungsgemäß durch ein plattenförmiges Werkstück mit einem an einer Schmalfläche angebrachten Kantenmaterial nach Anspruch 1 gelöst. Besonders bevorzugte Ausführungsformen der Erfindung sind in den abhängigen Ansprüchen angegeben.

Der Erfindung liegt der Gedanke zugrunde, das Kantenmaterial zur Anbringung an einer Schmalfläche eines Werkstücks derart weiterzuentwickeln, dass es sich gut an die gewünschte Kontur der Schmalfläche anpassen kann, jedoch weiterhin ausreichend Stabilität besitzt, um das Werkstück im Bereich der Schmalfläche zu schützen und zu stabilisieren. Vor diesem Hintergrund ist erfindungsgemäß vorgesehen, dass bei einem gattungsgemäßen Kantenmaterial zumindest eine Materialschicht des Kantenmaterials als Quermaterialschicht ausgebildet ist, die in Längsrichtung des Kantenmaterials eine niedrigere Steifigkeit aufweist als in einer hiervon abweichenden, bevorzugt in der Ebene des Kantematerials liegenden Querrichtung.

Auf diese Weise erhält man ein völlig neuartiges Kantenmaterial mit einem maßgeschneiderten Verformungsverhalten, da sich das Kantenmaterial optimal an die Kontur der Schmalfläche des Werkstücks anpassen lässt. Gleichzeitig besitzt das Kantenmaterial in Querrichtung eine vergleichsweise hohe Steifigkeit, sodass das Kantenmaterial vorteilhaft auch zu einer Stabilisierung der Schmalfläche beitragen kann.

Die definierte Steifigkeit der Quermaterialschicht bzw. auch anderer Materialschichten kann beispielsweise als Biege-Elastizitätsmodul nach DIN EN 310 ("Holzwerkstoffe - Bestimmung der Biegefestigkeit und des Biege-Elastizitätsmoduls") bestimmt werden. In Abhängigkeit von dem verwendeten Material der mindestens einen Quermaterialschicht kann der Elastizitätsmodul anhand der entsprechenden einschlägigen deutschen (oder gegebenenfalls europäischen, internationalen oder sonstigen) Normen ermittelt werden.

Die Erfindung stellt somit ein Werkstück mit platten- oder leistenförmiger Gestalt bereit, das bevorzugt zumindest abschnittsweise aus Holz, Holzwerkstoffen, Kunststoff oder dergleichen besteht, wobei das Werkstück an einer Schmalfläche ein erfindungsgemäßes Kantenmaterial aufweist. Auf diese Weise lässt sich ein hochwertiges Werkstück bereitstellen, das mit einfachen Mitteln und bei einfachem Verfahrensablauf hergestellt werden kann.

Gemäß einer Weiterbildung der Erfindung ist vorgesehen, dass die Querrichtung um mindestens 30°, bevorzugt mindestens 45°, besonders bevorzugt im Wesentlichen 90° von der Längsrichtung abweicht. Hierdurch lassen sich die obigen Vorteile besonders ausgeprägt erzielen, ohne dass eine Verschlechterung der sonstigen Eigenschaften des Kantenmaterials in Kauf genommen werden müsste.

Das Kantenmaterial kann prinzipiell ausschließlich durch Quermaterialschichten gebildet sein. Gemäß einer Weiterbildung der Erfindung ist jedoch vorgesehen, dass mindestens eine Materialschicht als Basismaterialschicht ausgebildet ist, wobei bevorzugt die Basismaterialschicht in Längsrichtung eine höhere Steifigkeit aufweist, wie die mindestens eine Quermaterialschicht. Hierdurch ergibt sich ein "Hybridkantenmaterial", dessen Materialschichten maßgeschneiderte Eigenschaften besitzen. Während nämlich die mindestens eine Quermaterialschicht die oben genannten Vorteile besitzt, kann die mindestens eine Basismaterialschicht dazu beitragen, die Quermaterialschicht in Längsrichtung des Kantenmaterials zusammenzuhalten. Hierdurch werden nicht nur Sprödbrüche vermieden, sondern es wird auch sichergestellt, dass das Kantenmaterial auch nach einem Biegevorgang eine glatte und dichte Oberfläche besitzt.

Die mindestens eine Quermaterialschicht kann im Rahmen der Erfindung aus unterschiedlichsten Materialien hergestellt sein, wie beispielsweise auch Kunststoff, Metall oder dergleichen. Die erfindungsgemäßen anisotropen Eigenschaften der Quermaterialschicht können in diesen Fällen beispielsweise auch durch gezielte Querschnittsschwächungen hervorgerufen sein, die beispielsweise mittels eines Lasers oder anderer geeigneter Mittel erzeugt sein können. Gemäß einer Weiterbildung der Erfindung ist jedoch vorgesehen, dass die mindestens eine Quermaterialschicht ein Faser- oder Spanmaterial aufweist. Hierdurch lassen sich die gewünschten, anisotropen Eigenschaften besonders wirksam erzielen. Dabei haben sich holzbasierte Materialien als besonders vorteilhaft erwiesen, wobei hier unterschiedlichste holzbasierte Materialien von beispielsweise Karton bis hin zu Massivholz vorstellbar sind. Daneben sind auch andere Faserverbundwerkstoffe denkbar, die beispielsweise Glas- oder Kohlefasern enthalten können.

Auch die mindestens eine Basismaterialschicht kann im Rahmen der vorliegenden Erfindung durch unterschiedlichste geeignete Materialien gebildet werden. Als besonders vorteilhaft hat es sich jedoch erwiesen, dass die Basismaterialschicht ein Material aufweist, das ausgewählt ist aus Faser- oder Spanmaterial, Bahn- oder Folienmaterial, insbesondere aus Kunststoff, Metall, Kraftpapier, sowie Klebstoff.

In diesem Zusammenhang ist zu beachten, dass die mindestens eine Basismaterialschicht und die mindestens eine Quermaterialschicht nicht einstückig ausgebildet sein müssen, obgleich dies ebenfalls denkbar ist. Vielmehr ist gemäß einer Weiterbildung der Erfindung vorgesehen, dass die mindestens eine Basismaterialschicht und die mindestens eine Quermaterialschicht miteinander verbunden sind. Hierdurch lassen sich die Eigenschaften des erfindungsgemäßen Kantenmaterials besonders flexibel an die jeweiligen Anforderungen anpassen, indem beispielsweise ein bestimmtes Basismaterial je nach Werkstückgeometrie, Anforderungsklasse oder sonstigen Kriterien mit einer geeigneten Quermaterialschicht kombiniert wird, oder umgekehrt. Diese Flexibilität hat sich als besonders vorteilhaft erwiesen, da bei der Produktion der hier zur Rede stehenden Werkstücke zunehmend kleine Losgrößen bis hin zu Einzelstücken produziert werden müssen.

Ferner ist zu beachten, dass die Verbindung der mindestens einen Basismaterialschicht und der mindestens einen Quermaterialschicht zu einem beliebigen Zeitpunkt erfolgen kann, beispielsweise auch erst während des Anbringens dieser Schichten an das jeweilige Werkstück.

Gemäß einer Weiterbildung der Erfindung ist ferner vorgesehen, dass es mindestens zwei Quermaterialschichten aufweist, zwischen denen mindestens eine Basismaterialschicht angeordnet ist. Auf diese Weise ist jede der Materialschichten an einem geometrisch optimalen Ort angeordnet. So kann die Basismaterialschicht beide Quermaterialschichten gleichzeitig stabilisieren, während die Quermaterialschichten mit ihrer in Längsrichtung des Kantenmaterials verminderten Steifigkeit derart angeordnet sind, dass sich in Längsrichtung des Kantenmaterials eine insgesamt minimale Biegesteifigkeit ergibt. Ferner kann die Basismaterialschicht vorteilhaft dazu dienen, die mindestens zwei Quermaterialschichten miteinander zu verbinden.

Es hat sich gezeigt, dass die erfindungsgemäße Kombination eines Werkstücks mit dem erfindungsgemäßen Kantenmaterial besonders vorteilhaft ist, wenn das Werkstück senkrecht zu seiner Erstreckungsebene zumindest abschnittsweise eine veränderliche Dichte aufweist, wobei die Dichte in einem Oberflächenbereich des Werkstücks höher ist als in einem Kernbereich des Werkstücks. In diesen Fällen treten die Vorteile der erfindungsgemäßen "Hybridkante" besonders deutlich hervor, da bei derartigen Werkstücken bisher eine besonders starke "Schüsselung" des Kantenmaterials (insbesondere bei kleinen Krümmungsradien der Schmalfläche) auftrat. Diese Probleme können mit dem erfindungsgemäßen Kantenmaterial weitgehend oder vollständig beseitigt werden. Beispiele für derartige Werkstücke sind beispielsweise Leichtbauplatten, die beispielsweise durch verschiedene Span-, Sperrholz oder Wabenplatten gebildet sein können.

Ferner treten die Vorteile des erfindungsgemäßen Kantenmaterials bzw. der erfindungsgemäßen Kombination des Kantenmaterials mit einem Werkstück besonders deutlich zutage, wenn gemäß einer Weiterbildung des erfindungsgemäßen Werkstücks die Schmalfläche und das daran angeordnete Kantenmaterial in ihrer Erstreckungsrichtung zumindest bereichsweise eine kontinuierliche Krümmung aufweisen.

### Kurze Beschreibung der Zeichnungen

- Fig. 1: zeigt schematisch eine Perspektivansicht einer Ausführungsform des erfindungsgemäßen Werkstücks;
- Fig. 2: zeigt schematisch Schnittansichten zweier Ausführungsform des erfindungsgemäßen Werkstücks im Bereich der Schmalfläche;
- Fig. 3: zeigt schematisch teilweise Perspektivansichten verschiedener Ausführungsformen des erfindungsgemäßen Kantenmaterials.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

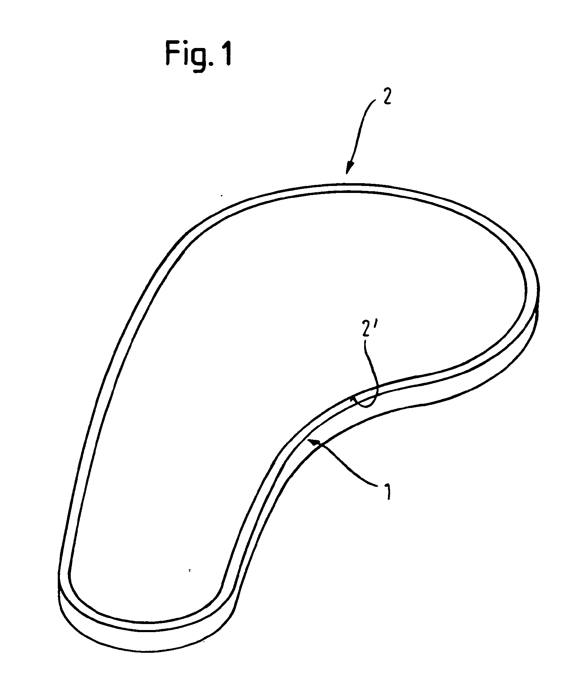

Ein Werkstück 2 als bevorzugte Ausführungsform der vorliegenden Erfindung ist in Fig. 1 schematisch in einer Perspektivansicht dargestellt. Bei dem gezeigten Werkstück 2 kann es sich beispielsweise um eine Möbelplatte handeln, wie sie beispielsweise für Fronten oder Korpusteile häufig eingesetzt wird. Ebenso kann es sich bei dem Werkstück 2 beispielsweise auch um ein Bauelement oder dergleichen handeln.

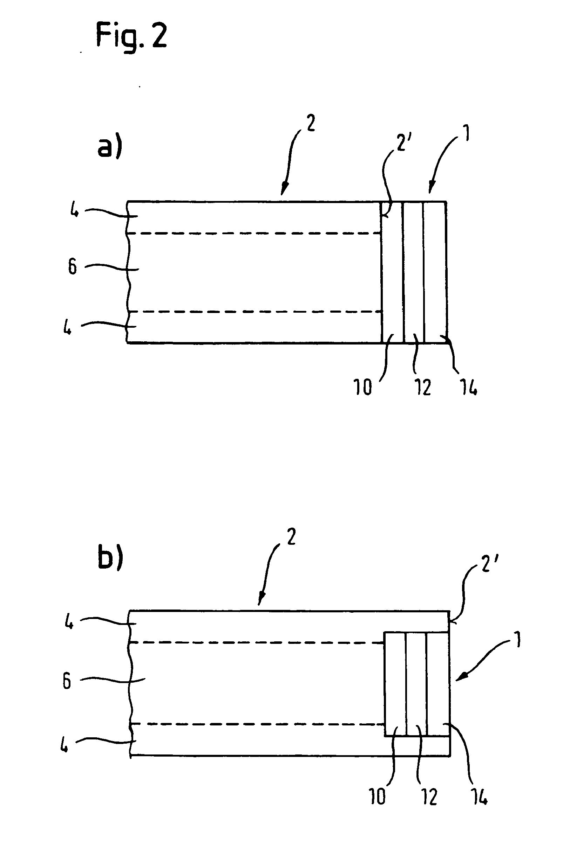

Das Material des Werkstücks 2 ist im Rahmen der vorliegenden Erfindung nicht besonders beschränkt, obgleich es sich häufig um ein Werkstück handeln wird, das zumindest abschnittsweise aus Holz, Holzwerkstoffen, Kunststoff oder dergleichen besteht. Dabei weist das Werkstück 2 in der vorliegenden Ausführungsform senkrecht zu seiner Erstreckungsebene eine veränderliche Dichte auf, indem die Dichte in einem Oberflächenbereich 4 des Werkstücks höher ist als in einem Kernbereich 6 (vgl. Fig. 2). Dies kann bei Span- oder Sperrholzplatten dadurch geschehen, dass die Werkstücke zwar einstückig ausgebildet sind, die Partikel der Platte im Kernbereich jedoch mit einer geringeren Packungsdichte angeordnet sind. Alternativ ist es ebenso möglich, das jeweilige Werkstück 2 mehrschichtig auszubilden, beispielsweise indem eine leichte Kernlage (z.B. aus einer Papierwabe) zwischen zwei Decklagen mit höherer Dichte (z.B. aus Spanplattenmaterial) angeordnet wird. Darüber hinaus sind auch vielfältige andere Ausgestaltungen des Werkstücks 2 im Rahmen der Erfindung möglich.

Wie in Fig. 1 ebenfalls zu erkennen ist, weist das Werkstück 2 an einer Schmalfläche 2' ein Kantenmaterial 1 auf, wobei die Schmalfläche 2' und somit auch das Kantenmaterial 1 in der vorliegenden Ausführungsform zumindest bereichsweise eine kontinuierliche, teils ausgeprägte Krümmung aufweisen. Die Anbindung des Kantenmaterials 1 an das Werkstück 2 ist in Fig. 2 in zwei Schnittansichten näher veranschaulicht. Wie in Fig. 2(a) zu erkennen ist, kann das Kantenmaterial 1 flächig auf eine Ebene, formatierte Schmalfläche 2' aufgebracht werden. Alternativ ist es ebenso möglich, wie in Fig. 2(b) gezeigt, in der Schmalfläche 2' eine Nut vorzusehen, in die anschließend das gesamte Kantenmaterial 1 oder ein entsprechend profilierter Abschnitt (nicht gezeigt) des Kantenmaterials 1 eingebracht wird. Ebenso ist es möglich und in machen Fällen auch vorteilhaft, das Kantenmaterial ohne vorherige Ausformung einer (vollständigen) Nut in den Kernbereich 6 hineinzudrücken (nicht gezeigt). In beiden in Fig. 2 gezeigten Fällen kann anschließend noch eine sogenannte Dekorkante (nicht gezeigt) auf das Kantenmaterial 1 aufgebracht werden.

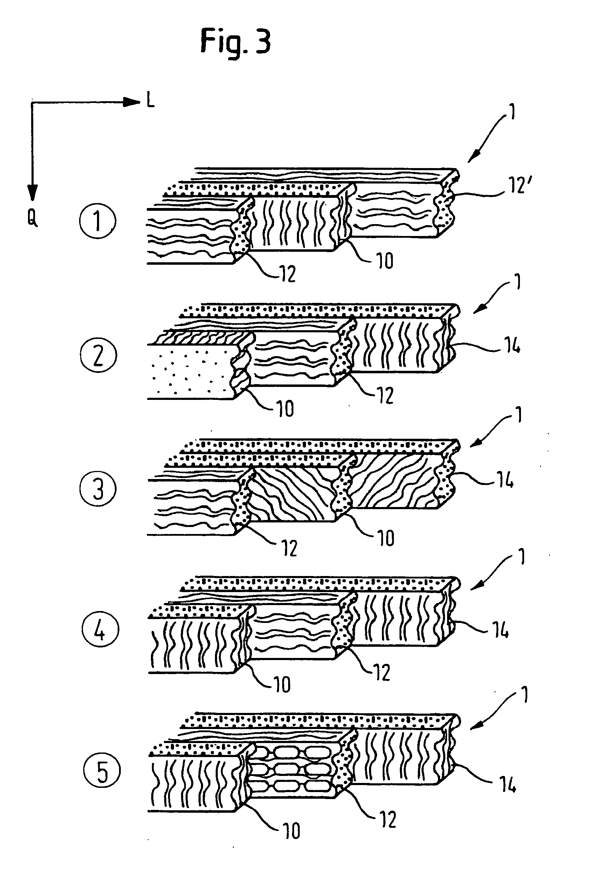

Ausführungsformen des erfindungsgemäßen Kantenmaterials 1 sind in Fig. 3 schematisch in teilweisen Perspektivansichten dargestellt und mit 1 bis 5 durchnummeriert. Allen Ausführungsformen ist gemeinsam, dass das Kantenmaterial 1 drei Materialschichten 10, 12 und 14 aufweist, obgleich die vorliegende Erfindung nicht hierauf beschränkt ist und auch Kantenmaterialien 1 mit mehr oder weniger Materialschichten zum Einsatz kommen können. Wendet man sich zunächst der mit "4" gekennzeichneten Ausführungsform zu, weist diese zwei Quermaterialschichten 10, 14 auf. Diese zeichnen sich dadurch aus, dass sie in Längsrichtung (in Fig. 3 mit "L" bezeichnet) des Kantenmaterials eine niedrigere Steifigkeit aufweisen als in der hiervon abweichenden, in der Ebene des Kantenmaterials liegenden Querrichtung (die in Fig. 3 mit "Q" gekennzeichnet ist). Dabei weicht bei der in Fig. 3 gezeigten Ausführungsform "4" die Querrichtung "Q" um etwa 90° von der Längsrichtung L ab. Dies wird bei der vorliegenden Ausführungsform dadurch erreicht, dass die Quermaterialschichten 10, 14 durch ein Faser- bzw. Spanmaterial gebildet wird, wie beispielsweise Holz, Spanplatte, Sperrholzplatte oder dergleichen. Dabei erstreckt sich die Faserrichtung der Quermaterialschichten 10, 14 in der vorliegenden Ausführungsform parallel zur Ebene des Kantenmaterials (von oben nach unten in Fig. 3). Auf diese Weise lässt sich mit einfachen Mitteln die gewünschte Anisotropie der Steifigkeit erzielen. Es ist jedoch zu beachten, dass die Quermaterialschichten 10, 14 jeweils durch unterschiedlichste Materialien gebildet sein können, und dass die Faserrichtungen (bzw. Richtungen der Anisotropie) unter unterschiedlichen Winkeln von der Längsrichtung des Kantenmaterials abweichen können, was bei den nachfolgenden Ausführungsformen noch näher erläutert wird.

Ferner umfasst das Kantenmaterial 1 in der vorliegenden Ausführungsform eine Basismaterialschicht 12, die in Längsrichtung L eine höhere Steifigkeit aufweist als die Quermaterialsichten 10, 14. Dies kann beispielsweise dadurch bewirkt werden, dass die Basismaterialschicht ebenfalls durch ein Fasermaterial gebildet wird, wobei die Fasern in diesem Falle im Wesentlichen in Längsrichtung L ausgerichtet sind. Die Basismaterialschicht 12 kann jedoch auch durch vielfältige andere Materialien gebildet sein, wie beispielsweise Bahn- oder Folienmaterialien (z.B. Kunststoff, Metall, Kraftpapier oder dergleichen). In diesem Falle kann die Steifigkeit der Basismaterialschicht 12 auch deutlich geringer sein als diejenige der Quermaterialschichten 10 oder 14, wobei sich die Basismaterialschicht 12 dann vorteilhaft durch ein hohes Verformungsvermögen auszeichnen kann, um auch bei großen Verformungen einen Zusammenhalt des Kantenmaterials 1 zu bewirken. Alternativ ist es ebenso möglich, die Basismaterialschicht 12 beispielsweise durch eine Klebstoffschicht zu bilden, welche die Quermaterialschichten 10 und 14 dauerhaft und verformbar miteinander verbindet.

Weitere bevorzugte Ausführungsformen des erfindungsgemäßen Kantenmaterials 1 werden nachfolgend unter Bezugnahme auf Fig. 3 erläutert. Die in Fig. 3 gezeigte Ausführungsform "2" unterscheidet sich von der oben diskutierten Ausführungsform "4" primär dadurch, dass die Faserrichtung der Quermaterialschicht 10 um 90° um die Längsachse L gedreht ist. Hierdurch lässt sich beispielsweise das Eindrücken des Kantenmaterials in eine in dem Werkstück 2 vorgesehene Nut erleichtern, während gleichzeitig die Anpassungsfähigkeit des Kantenmaterials 1 entlang der Schmalfläche 1' erhalten bleibt und die äußere Quermaterialschicht 14 ihre Stützwirkung senkrecht zur Werkstücksebene beibehält.

Die in Fig. 3 gezeigte Ausführungsform "5" unterscheidet sich von der oben diskutierten Ausführungsform "4" dadurch, dass die Basismaterialschicht 12 Perforationen aufweist.

Die in Fig. 3 gezeigte Ausführungsform "3" zeichnet sich dadurch aus, dass die Faserrichtungen der Quermaterialschichten 10 und 14 um nur etwa 45° von der Längsrichtung L abweichen. Ferner ist die Basismaterialschicht 12 in dieser Ausführungsform nicht zwischen den Quermaterialschichten 10, 14, sondern auf der dem Werkstück 2 (nicht gezeigt) zugewandten Seite der Quermaterialschichten 10, 14 angeordnet ist. Hierdurch erhält man wiederum ein gleichmäßiges Verformungsverhalten sowie eine leichte Einbringbarkeit des Kantenmaterials in eine etwaige Ausnehmung des Werkstücks 2.

Wendet man sich schließlich der in Fig. 3 gezeigten Ausführungsform "1" zu, zeichnet sich diese dadurch aus, dass eine Quermaterialschicht 10 sandwichartig zwischen zwei Längsmaterialschichten 12, 12' vorgesehen ist.

## Patentansprüche

1. Werkstück (2) mit platten- oder leistenförmiger Gestalt, das bevorzugt zumindest abschnittsweise aus Holz, Holzwerkstoffen, Kunststoff oder dergleichen besteht, wobei das Werkstück (2) an einer Schmalfläche (2') ein Kantenmaterial (1) zum Anbringen an bevorzugt plattenförmigen Werkstücke (2) aufweist, welches Kantenmaterial (1) eine allgemein längliche Gestalt mit einer Längsrichtung (L) besitzt, wobei das Kantenmaterial (1) mindestens eine Materialschicht (10, 12, 14) aufweist, und **dadurch gekennzeichnet, dass**
zumindest eine Materialschicht (10, 14) des Kantenmaterials (1) als Quermaterialschicht ausgebildet ist, die in Längsrichtung (L) des Kantenmaterials eine niedrigere Steifigkeit aufweist als in einer hiervon abweichenden, bevorzugt in der Ebene des Kantenmaterials liegenden Querrichtung (Q).

2. Werkstück (1) mit Kantenmaterial nach Anspruch 1,
**dadurch gekennzeichnet, dass** die Querrichtung (Q) des Kantenmaterials um mindestens 30 Grad, bevorzugt mindestens 45 Grad, besonders bevorzugt im Wesentlichen 90 Grad von der Längsrichtung (L) abweicht.

3. Werkstück (1) mit Kantenmaterial nach Anspruch 1 oder 2,
**dadurch gekennzeichnet, dass** mindestens eine Materialschicht (12) des Kantenmaterials als Basismaterialschicht ausgebildet ist, wobei bevorzugt die Basismaterialschicht (12) in Längsrichtung (L) eine höhere Steifigkeit aufweist als die mindestens eine Quermaterialschicht (10, 14) des Kantenmaterials.

4. Werkstück (1) mit Kantenmaterial nach einem der vorhergehenden Ansprüche, **dadurch gekennzeichnet, dass** die mindestens eine Quermaterialschicht (10, 14) des Kantenmaterials ein Faser- oder Spanmaterial aufweist, das bevorzugt holzbasiert ist.

5. Werkstück (1) mit Kantenmaterial nach einem der vorhergehenden Ansprüche, **dadurch gekennzeichnet, dass** die mindestens eine Basismaterialschicht (12) des Kantenmaterials ein Material aufweist, das ausgewählt ist aus Faser- oder Spanmaterial, Bahn- oder Folienmaterial, insbesondere aus Kunststoff, Metall, Kraftpapier, und Klebstoff.

6. Werkstück (1) mit Kantenmaterial nach einem der vorhergehenden Ansprüche, **dadurch gekennzeichnet, dass** die mindestens eine Basismaterialschicht (12) des Kantenmaterials und die mindestens eine Quermaterialschicht (10, 14) des Kantenmaterials miteinander verbunden sind.

7. Werkstück (1) mit Kantenmaterial nach einem der vorhergehenden Ansprüche, **dadurch gekennzeichnet, dass** das Kantenmaterial mindestens zwei Quermaterialschichten (10, 14) aufweist, zwischen denen mindestens eine Basismaterialschicht (12) angeordnet ist, wobei die Basismaterialschicht (12) bevorzugt die mindestens zwei Quermaterialschichten (10, 14) miteinander verbindet.

8. Werkstück nach einem der vorangegangenen Ansprüche, **dadurch gekennzeichnet, dass** das Werkstück (2) senkrecht zu seiner Erstreckungsebene zumindest abschnittsweise eine veränderliche Dichte aufweist, wobei die Dichte in einem Oberflächenbereich (4) des Werkstücks höher ist als in einem Kernbereich (6) des Werkstücks.

9. Werkstück nach einem der vorangegangenen Ansprüche, **dadurch gekennzeichnet, dass** die Schmalfläche (2') und das daran angeordnete Kantenmaterial (1) in ihrer Erstreckungsrichtung zumindest bereichsweise eine kontinuierliche Krümmung aufweisen.

## Claims

1. Workpiece (2) having panel-like or strip-like form, which consists preferably at least in some sections of wood, derived timber products, plastic or the like, wherein the workpiece (2) on one narrow surface (2') has an edge material (1) for attachment to preferably panel-like workpieces (2), which edge material (1) has a generally elongated form with a longitudinal direction (L), wherein the edge material (1) has at least one material layer (10, 12, 14), and **characterised in that** at least one material layer (10, 14) of the edge material (1) is formed as a transverse material layer, which in longitudinal direction (L) of the edge material has a lower rigidity than in a transverse direction (Q) deviating therefrom, preferably lying in the plane of the edge material.

2. Workpiece (1) with edge material according to claim 1, **characterised in that** the transverse direction (Q) of the edge material deviates by at least 30 degrees, preferably at least 45 degrees, particularly preferably essentially 90 degrees, from the longitudinal direction (L).

3. Workpiece (1) with edge material according to claim 1 or 2, **characterised in that** at least one material layer (12) of the edge material is formed as a base material layer, wherein preferably the base material layer (12) in longitudinal direction (L) has a higher rigidity than the at least one transverse material layer (10, 14) of the edge material.

4. Workpiece (1) with edge material according to one of the preceding claims, **characterised in that** the at least one transverse material layer (10, 14) of the edge material has a fibrous material or chip material which is preferably wood-based.

5. Workpiece (1) with edge material according to one of the preceding claims, **characterised in that** the at least one base material layer (12) of the edge material has a material which is selected from fibrous material or chip material, web material or film material, in particular made from plastic, metal, kraft paper, and adhesive.

6. Workpiece (1) with edge material according to one of the preceding claims, **characterised in that** the at least one base material layer (12) of the edge material and the at least one transverse material layer (10, 14) of the edge material are joined to one another.

7. Workpiece (1) with edge material according to one of the preceding claims, **characterised in that** the edge material has at least two transverse material layers (10, 14), between which at least one base material layer (12) is arranged, wherein the base material layer (12) preferably joins the at least two transverse material layers (10, 14) to one another.

8. Workpiece according to one of the preceding claims, **characterised in that** the workpiece (2) vertically to its plane of extension has a changeable density at least in some sections, wherein the density in one surface region (4) of the workpiece is higher than in a core region (6) of the workpiece.

9. Workpiece according to one of the preceding claims, **characterised in that** the narrow surface (2') and the edge material (1) arranged thereon have a continuous curvature at least in some regions in their direction of extension.

## Revendications

1. Pièce à usiner (2) avec une configuration en forme de panneau ou de baguette qui est de préférence au moins par section en bois, matériaux dérivés du bois, matière plastique ou similaires, la pièce à usiner (2) présentant au niveau d'un chant (2'), un matériau de rebord (1) à appliquer au niveau de pièces à usiner (2) de préférence en forme de panneau, lequel matériau de rebord (1) a une configuration généralement oblongue avec un sens longitudinal (L), le matériau de rebord (1) présentant au moins une couche de matériau (10, 12, 14), et **caractérisée en ce que** au moins une couche de matériau (10, 14) du matériau de rebord (1) est réalisée sous forme de couche de matériau transversale qui présente dans le sens longitudinal (L) du matériau de rebord une rigidité inférieure à celle présente dans le sens transversal (Q) en divergeant, située de préférence dans le plan du matériau de rebord.

2. Pièce à usiner (1) avec matériau de rebord selon la revendication 1, **caractérisée en ce que** le sens transversal (Q) du matériau de rebord diverge d'au moins 30 degrés, de préférence d'au moins 45 degrés, de manière particulièrement préférée sensiblement de 90 degrés par rapport au sens longitudinal (L).

3. Pièce à usiner (1) avec matériau de rebord selon la revendication 1 ou 2, **caractérisée en ce qu'**au moins une couche de matériau (12) du matériau de rebord est réalisée sous forme de couche de matériau de base, la couche de matériau de base (12) présentant de préférence dans le sens longitudinal (L) une rigidité supérieure à celle de l'au moins une couche de matériau transversale (10, 14) du matériau de rebord.

4. Pièce à usiner (1) avec matériau de rebord selon l'une quelconque des revendications précédentes, **caractérisée en ce que** l'au moins une couche de matériau transversale (10, 14) du matériau de rebord présente un matériau à fibres ou particules qui est de préférence à base de bois.

5. Pièce à usiner (1) avec matériau de rebord selon l'une quelconque des revendications précédentes, **caractérisée en ce que** l'au moins une couche de matériau de base (12) du matériau de rebord présente un matériau qui est choisi en matériau à fibres ou particules, matériau en bande ou film, en particulier en matière plastique, métal, papier kraft et colle.

6. Pièce à usiner (1) avec matériau de rebord selon l'une quelconque des revendications précédentes, **caractérisée en ce que** l'au moins une couche de matériau de base (12) du matériau de rebord et l'au moins une couche de matériau transversale (10, 14) du matériau de rebord sont reliées l'une à l'autre.

7. Pièce à usiner (1) avec matériau de rebord selon l'une quelconque des revendications précédentes, **caractérisée en ce que** le matériau de rebord présente au moins deux couches de matériau transversales (10, 14), entre lesquelles est agencée au moins une couche de matériau de base (12), la couche de matériau de base (12) reliant ensemble de préférence les couches de matériau transversales (10, 14) au moins au nombre de deux.

8. Pièce à usiner selon l'une quelconque des revendications précédentes, **caractérisée en ce que** la pièce à usiner (2) présente perpendiculairement à son plan d'extension au moins par section une densité variable, la densité au niveau d'une surface (4) de la pièce à usiner étant supérieure à celle du noyau (6) de la pièce à usiner.

9. Pièce à usiner selon l'une quelconque des revendications précédentes, **caractérisée en ce que** le chant (2') et le matériau de rebord (1) qui y est agencé présentent dans leur sens d'extension au moins par zones une courbure continue.
